# EUROPEAN PATENT SPECIFICATION

(11) **EP 3 981 959 B1**
(45) Date of publication and mention of the grant of the patent: **14.08.2024**
(21) Application number: 20822749.6
(22) Date of filing: 27.05.2020
(51) Int. Cl.: F01N 3/04, F01N 3/20, B01J 23/34, B01J 21/16

(54) **SHIP EXHAUST GAS PURIFICATION APPARATUS**
VORRICHTUNG ZUR REINIGUNG VON ABGASEN EINES SCHIFFES
APPAREIL D'ÉPURATION DE GAZ D'ÉCHAPPEMENT DE NAVIRE

(30) Priority: 10.06.2019 KR 20190067694
(43) Date of publication of application: 13.04.2022
(73) Proprietor: Naemsaedduk Co., Ltd., Seongbuk-gu Seoul 02792 (KR); Pine Tree Partners LLC, Yeongdeungpo-gu Seoul 07236 (KR)
(72) Inventor: CHO, Young Sang, Seoul 02489 (KR); KIM, Myung Hun, Seoul 03046 (KR); HWANG, Eui Kun, Seoul 04425 (KR)
(74) Representative: Botti & Ferrari S.p.A.
(86) International application number: PCT/KR2020/006836
(87) International publication number: WO 2020/251194

(56) References cited:
- EP-A1- 2 775 112
- JP-A- H10 216 459
- KR-A- 20020 012 379
- KR-A- 20150 117 974
- KR-A- 20160 012 614
- KR-A- 20160 084 527
- KR-A- 20170 019 524

## Description

### [Technical Field]

The present application claims the priority benefit of Korean Patent Application No. 10-2019-0067694, filed on June 10, 2019, in the Korean Intellectual Property Office.

The present disclosure relates to a ship exhaust gas purification apparatus and method, and more particularly, to a ship exhaust gas purification apparatus and method in which an oxidizer comprising oxygen (O) is applied to the removal of sulfur dioxide (SO₂) and the removal of nitrogen oxide (NOₓ), thereby promoting the generation of ammonium bisulfate (NH₄HSO₄) and the reduction of nitrogen oxide (NOₓ) as well as decreasing the amount of ammonia (NH₃) used in the generation of ammonium bisulfate ((NH₄HSO₄) and the reduction of nitrogen oxide (NOₓ).

### [Background Art]

Exhaust gas of ship engines using high sulfur fuel oils includes carbon dioxide (CO₂), carbon monoxide (CO), sulfur dioxide (SO₂), nitrogen oxide (NOₓ), water vapor (H₂O), oxygen (O₂), nitrogen (N₂), etc. Among these pollutants, especially SO₂ and NOₓ emissions from ships are prohibited by international maritime organization (IMO). For example, regulations limiting NOx emissions from ships sailing in emission control area (ECA) including coastal areas of the United States in 2016 have tightened to reduce the NOx emissions below 20%. In particular, in case of SO₂ emissions that will be more strictly regulated from 2020, all ships are required to purify exhaust gas below SO₂ emissions for fuel oils containing 0.5% or less of sulfur when sailing in the sea, and below SO₂ emissions for fuel oils containing 0.1% or less of sulfur when sailing in emission control area (ECA).

Accordingly, in particular, it is very urgent to build a best plan for responding to SO₂ regulations effective in 2020. Among methods that have been proposed or developed to solve the problem in the shipping industry, the first one is a method using low sulfur fuel oil as proposed by IMO. However, when this method is adopted, there is a tremendous economic disadvantage as much as a price difference between low sulfur fuel oil and high sulfur fuel oil.

The second one is a method that converts SO₂ to low concentration of sulfurous or sulfuric acid by mounting and using a device (scrubber) for dissolving SO₂ included in engine exhaust gas with a large amount of water, and discharges it into seawater, or converts it to sodium or calcium salts, stores and then discards. However, this method has a disadvantage that it requires a large amount of high priced special steel materials and it is necessary to mount a very large scrubber, thereby aggravating an additional economic burden, and there is a technical difficulty that the stability of technology is not perfect.

The third one is a method that removes SO₂ included in ship exhaust gas using activated carbon. This method adsorbs SO₂ onto the surface and pores of the activated carbon, and the adsorption characteristics degrade at the temperature of 200°C or more due to the properties of the activated carbon, and it is necessary to continuously supply the activated carbon, resulting in low economic efficiency.

Meanwhile, as described above, the ship exhaust gas includes SO₂ as well as nitrogen oxide (NOₓ), and in general, nitrogen oxide (NOₓ) is removed through a selective catalytic reduction (SCR) apparatus. The SCR apparatus reduce nitrogen oxide (NOₓ) into N₂ by using urea or ammonia (NH₃) as a reducing agent and promoting the reduction reaction through an SCR catalyst. In operating the SCR apparatus, when exhaust gas including SO₂ and nitrogen oxide (NOₓ) is supplied to the SCR apparatus, ammonium bisulfate (NH₄HSO₄) is generated, and the generated ammonium bisulfate (NH₄HSO₄) is adsorbed onto the pores of the SCR catalyst. The ammonium bisulfate (NH₄HSO₄) adsorbed onto the pores of the SCR catalyst exists as a liquid up to about 320°C, and acts as a factor that degrades the performance of the SCR catalyst. EP2775112 A1 discloses a cleaning system for the reduction of SOₓ and particulate matter in exhaust gases from a marine combustion engine, burner or boiler.
KR20160012614 relates to a ship exhaust gas treatment device that comprises a first scrubber, which reduces the temperature of exhaust gas by bringing engine exhaust gas in contact with a first scrubbing solution and removes sulfur oxides contained in the exhaust gas; and a second scrubber which removes nitrogen oxides and sulfur oxides contained,

### [Disclosure]

### [Technical Problem]

The present disclosure is designed to solve the above-described problem, and therefore the present disclosure is directed to providing a ship exhaust gas purification apparatus and method in which when selectively removing sulfur dioxide (SO₂) included in ship exhaust gas or removing sulfur dioxide (SO₂) and nitrogen oxide (NOₓ) included in ship exhaust gas, in the removal of sulfur dioxide (SO₂), the sulfur dioxide (SO₂) removal efficiency is improved by maximizing the ammonium bisulfate (NH₄HSO₄) generation efficiency and removing the generated ammonium bisulfate (NH₄HSO₄) through the wet scrubbing process, and in the removal of nitrogen oxide (NOₓ), the nitrogen oxide (NOₓ) removal efficiency is improved by minimizing sulfur dioxide (SO₂) remaining in the ship exhaust gas.

The present disclosure is further directed to providing a ship exhaust gas purification apparatus and method which applies an oxidizer comprising oxygen (O) when removing sulfur dioxide (SO₂) and removing nitrogen oxide (NOₓ), thereby promoting the generation of ammonium bisulfate (NH₄HSO₄) and the reduction of nitrogen oxide (NOₓ) as well as decreasing the amount of ammonia (NH₃) used in the generation of ammonium bisulfate (NH₄HSO₄) and the reduction of nitrogen oxide (NOₓ).

### [Technical Solution]

To achieve the above-described object, a ship exhaust gas purification apparatus according to appended claim 1 is provided. Particular embodiments of the apparatus are disclosed in dependent claims 2-11.

A ship exhaust gas purification method according to an aspect of the present disclosure includes a sulfur dioxide removal step of converting sulfur dioxide (SO₂) included in ship exhaust gas to ammonium bisulfate (NH₄HSO₄) through reaction of sulfur dioxide (SO₂) and ammonia (NH₃), and an ammonium bisulfate removal step of dissolving the ammonium bisulfate (NH₄HSO₄) generated by the reaction of sulfur dioxide (SO₂) and ammonia (NH₃) in raw water to remove it, wherein an oxidizer is introduced in the sulfur dioxide removal step, and by the introduction of the oxidizer, a concentration of sulfur trioxide (SO₃) increases, which promotes the ammonium bisulfate (NH₄HSO₄) generation reaction.

The ship exhaust gas purification method includes a nitrogen oxide removal step between the sulfur dioxide removal step and the ammonium bisulfate removal step, the nitrogen oxide removal step of reducing nitrogen oxide (NOₓ) included in the ship exhaust gas to nitrogen (N₂) to remove it, wherein the oxidizer is introduced in the nitrogen oxide removal step, and by the introduction of the oxidizer, a concentration of the nitrogen dioxide (NO₂) increases, which promotes the nitrogen oxide reduction reaction.

In the sulfur dioxide removal step, the ammonium bisulfate (NH₄HSO₄) generation reaction is promoted, and nitrogen reduction reaction by reaction of nitrogen oxide (NOₓ) and ammonia (NH₃) is suppressed.

In the sulfur dioxide removal step, any one selected from the following conditions or a combination thereof may be applied to maximize the ammonium bisulfate (NH₄HSO₄) synthesis efficiency: condition for adjusting a temperature of the ship exhaust gas to 150-300°C, condition for introducing the oxidizer, condition for introducing ammonia (NH₃) 1-2 times larger than a molar equivalent of the sulfur dioxide (SO₂) included in the ship exhaust gas, and condition for loading an ammonium bisulfate synthesis catalyst, the condition of introducing the oxidizer may be that when any one of air and oxygen (O₂) or a mixture thereof is introduced as the oxidizer, an amount of the oxidizer introduced is 20% or more and 250% or less of total oxygen content included in the exhaust gas, when any one of hydrogen peroxide (H₂O₂) and ozone (O₃) or a mixture thereof is introduced as the oxidizer, the amount of the oxidizer introduced is 2% or more and 25% or less of the total oxygen content included in the exhaust gas, and when a mixture of at least one of air or oxygen (O₂) and at least one of hydrogen peroxide (H₂O₂) or ozone (O₃) is introduced as the oxidizer, the at least one of air or oxygen (O₂) is introduced in an adjusted amount to 10% or more and 200% or less of the total oxygen content included in the exhaust gas and at least one of hydrogen peroxide (H₂O₂) or ozone (O₃) is introduced in an adjusted amount to 1 % or more and 20% or less of the total oxygen content included in the exhaust gas.

In the ammonium bisulfate removal step, an amount of raw water that is 100-2000 times larger than a mass of the ammonium bisulfate (NH₄HSO₄) is introduced to dissolve the ammonium bisulfate (NH₄HSO₄).

The nitrogen oxide removal step may be performed by an SCR apparatus, any one of the following conditions or a combination thereof may be applied: condition for adjusting a temperature of the ship exhaust gas or a temperature inside the SCR apparatus to 200-450°C, condition for introducing the oxidizer, and condition for introducing ammonia (NH₃) 0.7-1.5 times larger than a molar equivalent of the nitrogen oxide (NOₓ) included in the ship exhaust gas, and the condition for introducing the oxidizer may be that when any one of air and oxygen (O₂) or a mixture thereof is introduced as the oxidizer, an amount of the oxidizer introduced is 20% or more and 250% or less of total oxygen content included in the exhaust gas, when any one of hydrogen peroxide (H₂O₂) and ozone (O₃) or a mixture thereof is introduced as the oxidizer, the amount of the oxidizer introduced is 2% or more and 25% or less of the total oxygen content included in the exhaust gas, and when a mixture of at least one of air or oxygen (O₂) and at least one of hydrogen peroxide (H₂O₂) or ozone (O₃) is introduced as the oxidizer, the at least one of air or oxygen (O₂) is introduced in an adjusted amount to 10% or more and 200% or less of the total oxygen content included in the exhaust gas, and the at least one of hydrogen peroxide (H₂O₂) or ozone (O₃) is introduced in an adjusted amount to 1 % or more and 20% or less of the total oxygen content included in the exhaust gas.

In the sulfur dioxide removal step, an amount of ammonia (NH₃) that is 1-2 times larger than a molar equivalent of the sulfur dioxide (SO₂) included in the ship exhaust gas and an amount of ammonia (NH₃) that is 0.7-1.5 times larger than a molar equivalent of the nitrogen oxide (NOₓ) included in the ship exhaust gas may be introduced into a sulfur dioxide removal apparatus.

### [Advantageous Effects]

The ship exhaust gas purification apparatus and method according to an aspect of the present disclosure has the following effects.

It is possible to completely remove sulfur dioxide (SO₂) from ship exhaust gas by adopting a method which induces reaction of sulfur dioxide (SO₂) and ammonia (NH₃) to generate ammonium bisulfate (NH₄HSO₄) and removes the ammonium bisulfate (NH₄HSO₄) through a wet scrubbing process in the removal of sulfur dioxide (SO₂) included in ship exhaust gas.

Additionally, it is possible to promote the ammonium bisulfate (NH₄HSO₄) generation reaction and the nitrogen oxide (NOₓ) reduction reaction through the introduction of the oxidizer, and based on this, to decrease the amount of ammonia (NH₃) introduced, thereby significantly reducing the ship exhaust gas purification cost.

It is possible to completely remove sulfur dioxide (SO₂) by the sulfur dioxide removal process when combined with the subsequent selective catalytic reduction (SCR) process, thereby avoiding the generation of ammonium bisulfate (NH₄HSO₄) in the pores and on the surface of the SCR catalyst and thus preventing the decrease in SCR efficiency due to ammonium bisulfate (NH₄HSO₄) in a liquid state.

In addition, it is possible to reduce the amount of raw water to below 1/10 of the existing wet scrubbing process used to dissolve sulfur dioxide (SO₂).

### [Description of Drawings]

FIG. 1 is a configuration diagram of a ship exhaust gas purification apparatus according to a first embodiment of the present disclosure.
FIG. 2 is a configuration diagram of a ship exhaust gas purification apparatus according to a second embodiment of the present disclosure.
FIG. 3 is a flowchart illustrating a ship exhaust gas purification method according to a first embodiment of the present disclosure.
FIG. 4 is a flowchart illustrating a ship exhaust gas purification method according to a second embodiment of the present disclosure.
FIG. 5 is a configuration diagram of an experimental apparatus applied to experimental examples 1 to 3.

### [Best Mode]

An embodiment of the present disclosure presents technology for effectively removing sulfur dioxide (SO₂) included in ship exhaust gas. In addition, an embodiment of the present disclosure presents technology for removing not only sulfur dioxide (SO₂) but also nitrogen oxide (NOₓ) in combination with a nitrogen oxide removal process.

The sulfur dioxide (SO₂) and nitrogen oxide (NOₓ) included in the ship exhaust gas are difficult to remove at the same time through a single process. Accordingly, in general, a sulfur dioxide (SO₂) removal process and a nitrogen oxide (NOₓ) removal process are separately performed, and the sulfur dioxide (SO₂) removal process is combined with the nitrogen oxide (NOₓ) removal process.

In performing the sulfur dioxide (SO₂) removal process and the nitrogen oxide (NOₓ) removal process in combination, it is necessary to minimize residue of gas to be processed in each process that remains in the ship exhaust gas after performing each process, and suppress the decline in the processing efficiency of the subsequent removal process due to the remaining gas. As mentioned in the 'background art', when the nitrogen oxide (NOₓ) reduction process is performed by the selective catalytic reduction (SCR) apparatus in the presence of sulfur dioxide (SO₂) remaining in the exhaust gas, ammonium bisulfate (NH₄HSO₄) is generated and blocks the SCR catalyst pores, resulting in a decrease in the nitrogen oxide (NOₓ) removal efficiency. Additionally, in the sulfur dioxide (SO₂) removal method using activated carbon, when sulfur dioxide (SO₂) and nitrogen oxide (NOₓ) are supplied together, the activated carbon adsorption characteristics may be degraded by ammonium bisulfate (NH₄HSO₄) adsorption.

An embodiment of the present disclosure presents technology that removes sulfur dioxide (SO₂) through reaction of ammonia (NH₃) and sulfur dioxide (SO₂). The reaction of ammonia (NH₃) and sulfur dioxide (SO₂) induces the generation of ammonium bisulfate (ABS) (NH₄HSO₄) as well as maximization of ammonium bisulfate (NH₄HSO₄) synthesis efficiency.

As well known, in general, ammonia (NH₃) is used as a reducing agent of the nitrogen oxide (NOₓ) removal process, and an embodiment of the present disclosure presents technology that applies ammonia (NH₃) to the sulfur dioxide (SO₂) removal process. Applying ammonia (NH₃) to the sulfur dioxide (SO₂) removal process in an embodiment of the present disclosure is to remove sulfur dioxide (SO₂) as well as induce the generation of ammonium bisulfate (NH₄HSO₄) through the reaction of ammonia (NH₃) and sulfur dioxide (SO₂).

Inducing the generation of ammonium bisulfate (NH₄HSO₄) through the reaction of ammonia (NH₃) and sulfur dioxide (SO₂) is to increase the efficiency of the wet scrubbing process. In case of the existing wet scrubbing process for desulfurization, the wet scrubbing process is performed on sulfur dioxide (SO₂), while an embodiment of the present disclosure performs the wet scrubbing process on ammonium bisulfate (NH₄HSO₄), not sulfur dioxide (SO₂). Since ammonium bisulfate (NH₄HSO₄) has higher solubility than sulfur dioxide (SO₂), it is possible to perform the wet scrubbing process using a smaller amount of water (or seawater).

By inducing the generation of ammonium bisulfate (NH₄HSO₄) through the reaction of ammonia (NH₃) and sulfur dioxide (SO₂) and carrying out dissolution and removal of ammonium bisulfate (NH₄HSO₄) through the subsequent wet scrubbing process in a sequential order, it is possible to minimize sulfur dioxide (SO₂) residues in the ship exhaust gas, thereby ultimately preventing the decrease in efficiency of the nitrogen oxide (NOₓ) removal process due to sulfur dioxide (SO₂).

In the generation of ammonium bisulfate (NH₄HSO₄) through the reaction of ammonia (NH₃) and sulfur dioxide (SO₂), to increase the ammonium bisulfate (NH₄HSO₄) synthesis efficiency, an oxidizer is applied together with temperature control.

When ammonia (NH₃) is introduced into the ship exhaust gas including both sulfur dioxide (SO₂) and nitrogen oxide (NOₓ), both the ammonium bisulfate (NH₄HSO₄) generation reaction and the nitrogen oxide (NOₓ) reduction reaction may occur, causing a decrease in ammonium bisulfate (NH₄HSO₄) synthesis efficiency. The ammonium bisulfate (NH₄HSO₄) generation reaction may be promoted and the nitrogen oxide (NOₓ) reduction reaction may be suppressed through the temperature control.

The ammonium bisulfate (NH₄HSO₄) synthesis efficiency may be increased through the temperature control, and in addition to this, an embodiment of the present disclosure presents technology that promotes the generation of ammonium bisulfate (NH₄HSO₄) by introducing the oxidizer into the reaction of ammonia (NH₃) and sulfur dioxide (SO₂). That is, it is possible to improve the ammonium bisulfate (NH₄HSO₄) synthesis efficiency through the temperature control and the introduction of the oxidizer.

As the generation of ammonium bisulfate (NH₄HSO₄) is promoted through the introduction of the oxidizer, it is possible to reduce the amount of ammonia (NH₃) necessary for the ammonium bisulfate (NH₄HSO₄) generation reaction. It represents that it is possible to save the ship exhaust gas purification cost.

The oxidizer used in the generation of ammonium bisulfate (NH₄HSO₄) is an oxidizer comprising oxygen, and is any one of air, oxygen (O₂), hydrogen peroxide (H₂O₂) and ozone (O₃) or a mixture thereof. In an embodiment of the present disclosure, the oxidizer may be applied to not only the above-described ammonium bisulfate (NH₄HSO₄) generation reaction but also the nitrogen oxide (NOₓ) reduction reaction. By applying the oxidizer to the nitrogen oxide (NOₓ) reduction reaction, it is possible to promote the nitrogen oxide (NOₓ) reduction reaction as well as reduce the amount of ammonia (NH₃) introduced into the nitrogen oxide (NOₓ) reduction reaction. Likewise, it is possible to reduce the ship exhaust gas purification cost by decreasing the amount of ammonia (NH₃) introduced.

It is known that the percentage of oxygen (O₂) present in the ship exhaust gas is about 3%. About 3% oxygen (O₂) is involved in the ammonium bisulfate (NH₄HSO₄) generation reaction and the nitrogen oxide (NOₓ) reduction reaction, but it is insufficient to promote the ammonium bisulfate (NH₄HSO₄) generation and the nitrogen oxide (NOₓ) reduction.

To promote the ammonium bisulfate (NH₄HSO₄) generation reaction and the nitrogen oxide (NOₓ) reduction reaction, an embodiment of the present disclosure introduces the oxidizer comprising oxygen (O₂) into each of the ammonium bisulfate (NH₄HSO₄) generation reaction and the nitrogen oxide (NOₓ) reduction reaction as described above.

Hereinafter, a ship exhaust gas purification apparatus and method according to first and second embodiments of the present disclosure will be described in detail with the accompanying drawings. The first embodiment relates to purification of sulfur dioxide (SO₂) included in ship exhaust gas, and the second embodiment relates to sequential purification of sulfur dioxide (SO₂) and nitrogen oxide (NOₓ) included in ship exhaust gas.

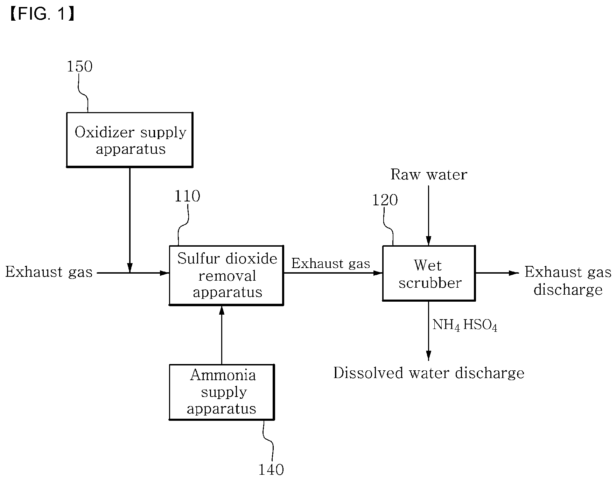

Referring to FIG. 1, the ship exhaust gas purification apparatus according to the first embodiment of the present disclosure includes a sulfur dioxide removal apparatus 110, a wet scrubber 120, an ammonia supply apparatus 140 and an oxidizer supply apparatus 150.

Sulfur dioxide (SO₂) included in the ship exhaust gas is purified while passing through the sulfur dioxide removal apparatus 110 and the wet scrubber 120 in a sequential order. The sulfur dioxide (SO₂) included in the ship exhaust gas is converted to ammonium bisulfate (NH₄HSO₄) by the sulfur dioxide removal apparatus 110, and the wet scrubber 120 dissolves and removes the ammonium bisulfate (NH₄HSO₄) generated in the sulfur dioxide removal apparatus 110.

The sulfur dioxide removal apparatus 110 provides a space for inducing the generation of ammonium bisulfate (NH₄HSO₄) through the reaction of sulfur dioxide (SO₂) and ammonia (NH₃). The ship exhaust gas is fed into the sulfur dioxide removal apparatus 110 from the ship engine, and ammonia (NH₃) is supplied to the sulfur dioxide removal apparatus 110 through the separate ammonia supply apparatus 140.

Additionally, to promote the reaction of sulfur dioxide (SO₂) and ammonia (NH₃), an oxidizer is mixed with the ship exhaust gas fed into the sulfur dioxide removal apparatus 110. As shown in the following equations 1 and 2, oxygen (O₂) is necessary in the ammonium bisulfate (NH₄HSO₄) generation process by the reaction of sulfur dioxide (SO₂) ammonia (NH₃), and to promote the reaction of sulfur dioxide (SO₂) and ammonia (NH₃), the oxidizer comprising oxygen (O₂) is mixed with the ship exhaust gas, and the ship exhaust gas mixed with the oxidizer is supplied to the sulfur dioxide removal apparatus 110. The oxidizer is supplied from the separate oxidizer supply apparatus 150, and the oxidizer supply apparatus 150 may supply the oxidizer to the exhaust pipe between the engine and the sulfur dioxide removal apparatus 110 or may supply the oxidizer directly to the sulfur dioxide removal apparatus 110. Here, the oxidizer comprising oxygen (O₂) is any one of air, oxygen (O₂), hydrogen peroxide (H₂O₂) and ozone (O₃) or a mixture thereof, and the condition for introduction and amount of the oxidizer will be described below.

The generation of ammonium bisulfate (NH₄HSO₄) by the reaction of sulfur dioxide (SO₂) and ammonia (NH₃) is described through the reaction equation of the following equations 1 and 2. As shown in Equation 1, sulfur dioxide (SO₂) included in the ship exhaust gas is converted to sulfur trioxide (SO₂) by the reaction with oxygen (O₂), and the sulfur trioxide (SO₃) is converted to ammonium bisulfate (NH₄HSO₄) by the reaction of ammonia (NH₃) and water (H₂O) (see Equation 2). As described above, oxygen (O₂) is involved in the ammonium bisulfate (NH₄HSO₄) generation process, and when the oxidizer, i.e., the oxidizer comprising oxygen is additionally introduced, the concentration of sulfur trioxide (SO₃) increases, which promotes the generation of ammonium bisulfate (NH₄HSO₄). This is based on the chemical reaction principle that the generation rate of a reactant is proportional to the concentration of the reactant. As the generation of ammonium bisulfate (NH₄HSO₄) is promoted by the introduction of the oxidizer, when the oxidizer is introduced, even if the amount of ammonia (NH₃) introduced is reduced by a predetermined amount, it is possible to generate the same amount of ammonium bisulfate (NH₄HSO₄) compared to the introduction of only ammonia (NH₃) without introducing the oxidizer. That is, in generating a particular amount of ammonium bisulfate (NH₄HSO₄), when the oxidizer is introduced, it is possible to reduce the amount of ammonia (NH₃) introduced, compared to when the oxidizer is not introduced.

(Equation 1) 2SO₂ + O₂ → 2SO₃

(Equation 2) SO₃ + H₂O + NH₃ → NH₄HSO₄

(Equation 3) 2NO + O₂ → 2NO₂

(Equation 4) NO + NO₂ + NH₃ → 2N₂ + 3H₂O

Meanwhile, in addition to the ammonium bisulfate (NH₄HSO₄) generation reaction (see Equations 1 and 2), the reaction between nitrogen oxide (NOₓ) and NH₃ included in the ship exhaust gas may occur in the sulfur dioxide removal apparatus 110 (see Equations 3 and 4). That is, the ammonium bisulfate (NH₄HSO₄) generation reaction by Equations 1 and 2 and the nitrogen oxide (NOₓ) reduction reaction by Equation 4 may take place together in the sulfur dioxide removal apparatus 110.

As described above, the ammonium bisulfate (NH₄HSO₄) generation reaction and the nitrogen reduction reaction by the reaction of nitrogen oxide (NOₓ) and NH₃ may simultaneously occur in the sulfur dioxide removal apparatus 110, and an embodiment of the present disclosure promote the ammonium bisulfate (NH₄HSO₄) generation reaction and suppresses the reaction between nitrogen oxide (NOₓ) and NH₃. The reason is because when the reaction between nitrogen oxide (NOₓ) and NH₃ takes place, it is possible to remove some of the nitrogen oxide (NOₓ) included in the ship exhaust gas, but the ammonium bisulfate (NH₄HSO₄) generation reaction is relatively less promoted, resulting in a decrease in the sulfur dioxide (SO₂) removal efficiency. An embodiment of the present disclosure applies the method that maximizes the generation of ammonium bisulfate (NH₄HSO₄) through the reaction of ammonia (NH₃) and sulfur dioxide (SO₂) and removes the generated ammonium bisulfate (NH₄HSO₄) through the subsequent wet scrubbing process, but when the ammonium bisulfate (NH₄HSO₄) generation reaction is relatively less promoted, it is difficult to completely remove sulfur (S) from the ship exhaust gas.

Maximizing the ammonium bisulfate (NH₄HSO₄) generation reaction (see Equations 1 and 2) and minimizing the nitrogen reduction reaction (see Equations 3 and 4) by the reaction of nitrogen oxide (NOₓ) and NH₃ may be achieved by adjusting the reaction temperature. That is, it is possible to maximize the ammonium bisulfate (NH₄HSO₄) generation reaction and minimize the nitrogen reduction reaction by the reaction of nitrogen oxide (NOₓ) and NH₃ by adjusting the temperature inside the sulfur dioxide removal apparatus 110 or the temperature of the ship exhaust gas. This is because the ammonium bisulfate (NH₄HSO₄) generation reaction takes place at a relatively low temperature, and the nitrogen reduction reaction by the reaction of nitrogen oxide (NOₓ) and NH₃ takes place at a relatively high temperature.

The ammonium bisulfate (NH₄HSO₄) generation reaction dominantly occurs at 150-300°C, and when the temperature inside the sulfur dioxide removal apparatus 110 or the temperature of the ship exhaust gas is higher than 300°C, the nitrogen reduction reaction by the reaction of nitrogen oxide (NOₓ) and NH₃ occurs. In view of this, it is desirable to adjust the temperature inside the sulfur dioxide removal apparatus 110 or the temperature of the ship exhaust gas to 150-300°C, and more preferably 180-250°C. When the temperature inside the sulfur dioxide removal apparatus 110 or the temperature of the ship exhaust gas is lower than 180°C, there is a likelihood that the generated ammonium bisulfate (NH₄HSO₄) will be liquefied, and when the temperature inside the sulfur dioxide removal apparatus 110 or the temperature of the ship exhaust gas is higher than 250°C, the ammonium bisulfate (NH₄HSO₄) synthesis efficiency may rapidly reduce. Taking into account the fact that the temperature of exhaust gas emanating through a turbocharger of the ship engine is about 220°C, it is possible to maximize the ammonium bisulfate (NH₄HSO₄) generation reaction without any temperature adjustment after the ship exhaust gas is fed into the sulfur dioxide removal apparatus 110.

Meanwhile, to increase the ammonium bisulfate (NH₄HSO₄) synthesis efficiency, along with the above-described temperature adjustment, it is necessary to adjust the amount of the oxidizer and ammonia (NH₃) introduced.

First, it is necessary to introduce the oxidizer under the following standards. As described above, the oxidizer is any one of air, oxygen (O₂), hydrogen peroxide (H₂O₂) and ozone (O₃) or a mixture thereof. The oxidizer is classified into the introduction of air, oxygen (O₂) or an oxygen mixture; the introduction of a hyper-oxygen compound such as hydrogen peroxide (H₂O₂) and ozone (O₃); and the introduction of oxygen (or the oxygen mixture) and the hyper-oxygen compound together.

When any one of air and oxygen (O₂) or a mixture thereof is introduced as the oxidizer, the amount of any one of air and oxygen (O₂) or its mixture introduced is 20% or more and 250% or less of the total oxygen content included in the exhaust gas, and preferably it is necessary to adjust to 30% or more and 200% or less of the total oxygen content. When the amount of the oxidizer introduced is smaller than 30% of the total oxygen content included in the exhaust gas, the ammonium bisulfate (NH₄HSO₄) generation promotion effect is insufficient, which makes it difficult to reduce the amount of ammonia (NH3) introduced, and when the amount of the oxidizer introduced is more than 200%, the ammonium bisulfate (NH₄HSO₄) generation efficiency does not additionally increase, and rather, the cost of introducing the oxidizer may be higher than the reducible cost of introducing the ammonia.

When any one of hydrogen peroxide (H₂O₂) and ozone (O₃) or a mixture thereof is introduced as the oxidizer, the amount of the oxidizer introduced is 2% or more and 25% or less of the total oxygen content included in the exhaust gas, and preferably it is necessary to adjust to 4% or more and 20% or less of the total oxygen content. When the amount of the oxidizer (any one of a hyperoxygen compound and ozone (O₃) or a mixture thereof) introduced is smaller than 4% of the total oxygen content included in the exhaust gas, the ammonium bisulfate (NH₄HSO₄) generation promotion effect is insufficient, which makes it difficult to reduce the amount of ammonia (NH3) introduced, and when the amount of the oxidizer introduced is more than 20%, the ammonium bisulfate (NH₄HSO₄) generation efficiency does not additionally increase, and rather, the cost of introducing the oxidizer may be higher than the reducible cost of introducing ammonia.

When a mixture of oxygen (any one of air and oxygen (O₂) or a mixture thereof) and the hyperoxygen compound (any one of hydrogen peroxide (H₂O₂) and ozone (O₃) or a mixture thereof) is introduced as the oxidizer, oxygen is introduced in the adjusted amount to 10% or more and 200% or less of the total oxygen content included in the exhaust gas, and the hyperoxygen compound is introduced in the adjusted amount to 1% or more and 20% or less of the total oxygen content included in the exhaust gas.

Subsequently, ammonia (NH₃) is introduced under the following standards.

It is necessary to introduce ammonia (NH₃) 1-2 times larger than the molar equivalent of sulfur dioxide (SO₂) included in the ship exhaust gas. As a more desirable condition, it is necessary to introduce ammonia (NH₃) 1.1-1.6 times larger than the molar equivalent of sulfur dioxide (SO₂) included in the ship exhaust gas. Here, when the amount of ammonia is 1.1 times smaller than the molar equivalent of sulfur dioxide (SO₂), the ammonium bisulfate (NH₄HSO₄) synthesis efficiency decreases, and when the amount of ammonia is 1.6 times larger than the molar equivalent of sulfur dioxide (SO₂), the risk of ammonia (NH₃) losses increases.

Meanwhile, another method for increasing the ammonium bisulfate (NH₄HSO₄) synthesis efficiency may use an ammonium bisulfate synthetic catalyst. The ammonium bisulfate synthetic catalyst plays a role in promoting the generation of ammonium bisulfate (NH₄HSO₄), and may be optionally loaded into the sulfur dioxide removal apparatus 110.

The ammonium bisulfate synthetic catalyst may include any one of an oxidation catalyst, a mixture of the oxidation catalyst and a solid acid and a solid acid embedded with the oxidation catalyst or a mixture thereof. The oxidation catalyst may be any one of MnO₂, V₂O₅, Ni, Pd and Pt or a mixture thereof. Additionally, the solid acid may be one selected from the group consisting of basalt, granite, limestone, sandstone, shale, metamorphic rock, kaolinite, attapulgite, bentonite, montmorillonite, zeolite, zinc oxide (ZnO), aluminum oxide (Al₂O₃), titanium oxide (TiO₂), cesium oxide (CeO₂), vanadium oxide (V₂O₅), silicon oxide (SiO₂), chromium oxide (Cr₂O₃), calcium sulfate (CaSO₄), manganese sulfate (MnSO₄), nickel sulfate (NiSO₄), copper sulfate (CuSO₄), cobalt sulfate (CoSO₄), cadmium sulfate (CdSO₄), magnesium sulfate (MgSO₄), iron II sulfate (FeSO₄), aluminum sulfate (Al₂(SO₄)₃), calcium nitrate (Ca(NO₃)₂), zinc nitrate (Zn(NO₃)₂), iron III nitrate (Fe(NO₃)₃), aluminum phosphate (AlPO₄), iron III phosphate (FePO₄), chromium phosphate (CrPO₄), copper phosphate (Cu₃(PO₄)₂), zinc phosphate (Zn₃(PO₄)₄), magnesium phosphate (Mg₃(PO₄)₂), aluminum chloride (AlCl₃), titanium chloride (TiCl₄), calcium chloride (CaCl₂), calcium fluoride (CaF₂), barium fluoride (BaF₂) and calcium carbonate (CaCO₃) or a mixture thereof.

Hereinabove, the configuration of the sulfur dioxide removal apparatus 110 and the technical principle for increasing the ammonium bisulfate (NH₄HSO₄) generation efficiency have been described. Subsequently, the wet scrubber 120 will be described. The wet scrubber 120 is a device that applies the wet scrubbing process to the ship exhaust gas processed by the sulfur dioxide removal apparatus 110.

The sulfur dioxide (SO₂) included in the ship exhaust gas is converted to ammonium bisulfate (NH₄HSO₄) by the sulfur dioxide removal apparatus 110, and the wet scrubber 120 plays a role in dissolving the ammonium bisulfate (NH₄HSO₄) included in the ship exhaust gas in raw water and discharging to remove it. The raw water may include water or seawater, and the raw water in which ammonium bisulfate (NH₄HSO₄) is dissolved, i.e., a dissolved water may be moved to a dissolved water storage tank provided on one side of the ship or may be discharged to seawater.

The wet scrubber 120 according to an embodiment of the present disclosure is used to dissolve ammonium bisulfate (NH₄HSO₄). In general, the wet scrubber 120 for desulfurization of the ship exhaust gas is used to dissolve sulfur dioxide (SO₂), while the wet scrubber 120 according to an embodiment of the present disclosure is used to dissolve ammonium bisulfate (NH₄HSO₄), not sulfur dioxide (SO₂). As the wet scrubber 120 is used to dissolve ammonium bisulfate (NH₄HSO₄), it is possible to significantly reduce the amount of water required for the wet scrubber 120. This is attributed to a difference in solubility between sulfur dioxide (SO₂) and ammonium bisulfate (NH₄HSO₄). On the basis of water, the solubility of sulfur dioxide (SO₂) is about 10.5g/100g, while the solubility of ammonium bisulfate (NH₄HSO₄) is about 115g/100g, with a difference of approximately 10 times. Additionally, sulfur dioxide (SO₂) requires water of relatively low temperature to increase the solubility, while ammonium bisulfate (NH₄HSO₄) has increasing solubility in water with increasing temperature. Accordingly, when the wet scrubbing process is performed on ammonium bisulfate (NH₄HSO₄), the wet scrubbing process may be performed using raw water below 1/10 of the sulfur dioxide (SO₂) wet scrubbing process, thereby significantly reducing the amount of raw water used. Taking into account the dissolution of ammonium bisulfate (NH₄HSO₄) in a gaseous state, it is appropriate that the amount of water or seawater introduced into the wet scrubber 120 is 100-2000 times larger than the mass of ammonium bisulfate (NH₄HSO₄), and preferably 300-1000 times.

The ship exhaust gas purification apparatus according to the first embodiment of the present disclosure has been hereinabove described. As described above, the first embodiment of the present disclosure relates to purification technology of sulfur dioxide (SO₂) included in ship exhaust gas. The second embodiment of the present disclosure relates to purification technology of sulfur dioxide (SO₂) as well as nitrogen oxide (NO₂).

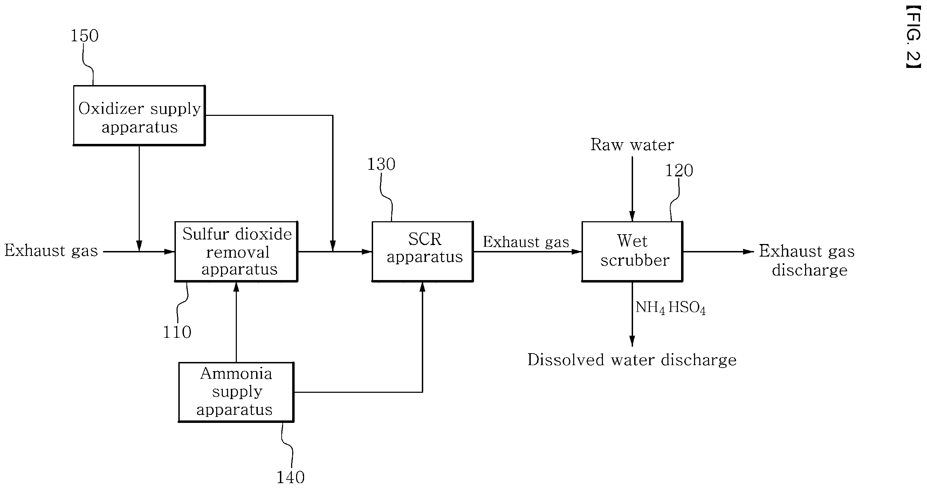

As shown in FIG. 2, the ship exhaust gas purification apparatus according to the second embodiment of the present disclosure adds the SCR apparatus 130 to the configuration of the first embodiment to purify not only sulfur dioxide (SO₂) but also nitrogen oxide (NO₂). In the second embodiment of the present disclosure, the configurations and functions of the sulfur dioxide removal apparatus 110, the wet scrubber 120, the ammonia supply apparatus 140 and the oxidizer supply apparatus 150 are the same as the first embodiment. However, in the first embodiment, ammonia and an oxidizer are supplied to the sulfur dioxide removal apparatus 110, and in case of the second embodiment, ammonia and an oxidizer are supplied to not only the sulfur dioxide removal apparatus 110 but also the SCR apparatus 130.

The SCR apparatus 130 is an apparatus that reduces and removes nitrogen oxide (NOₓ) included in the ship exhaust gas from the ship exhaust gas emanating from the sulfur dioxide removal apparatus 110. Specifically, after the ship exhaust gas is supplied to the SCR apparatus 130 equipped with an SCR catalyst, when a reducing agent is introduced into the SCR apparatus 130, nitrogen oxide (NOₓ) is reduced to nitrogen (N₂) by the reaction with the reducing agent. The SCR catalyst plays a role in promoting the reaction of nitrogen oxide (NOₓ) and the reducing agent.

Ammonia (NH₃) may be used as the reducing agent, and it is desirable to introduce ammonia (NH₃) 0.7-1.5 times larger than the molar equivalent of nitrogen oxide (NOₓ) included in the ship exhaust gas. As a more desirable condition, it is necessary to introduce ammonia (NH₃) into the SCR apparatus 130 in an amount that is 0.9-1.2 times larger than the molar equivalent of nitrogen oxide (NOₓ) included in the ship exhaust gas. Here, when the amount of ammonia (NH₃) is 0.9 times smaller than the molar equivalent of nitrogen oxide (NOₓ), the nitrogen oxide (NOₓ) removal rate may sharply decrease, and when the amount of ammonia (NH₃) is 1.2 times larger than the molar equivalent of nitrogen oxide (NOₓ), the risk of ammonia (NH₃) losses increases.

Ammonia (NH₃) used as the reducing agent of the SCR reaction may be directly supplied to the SCR apparatus 130 or may be supplied to the sulfur dioxide removal apparatus 110. Referring to the first embodiment, it is stated that ammonia (NH₃) is introduced into the sulfur dioxide removal apparatus 110 in an amount that is 1-2 times larger than the molar equivalent of sulfur dioxide (SO₂) included in the ship exhaust gas, but when the SCR apparatus 130 is added as in the second embodiment, ammonia (NH₃) may be additionally introduced into the sulfur dioxide removal apparatus 110 in an amount that is 0.7-1.5 times larger than the molar equivalent of nitrogen oxide (NOₓ) included in the ship exhaust gas. That is, when the sulfur dioxide removal apparatus 110 and the SCR apparatus 130 are provided as in the second embodiment, an amount of ammonia (NH₃) that is 1-2 times larger than the molar equivalent of sulfur dioxide (SO₂) and an amount of ammonia (NH₃) that is 0.7-1.5 times larger than the molar equivalent of nitrogen oxide (NOₓ) included in the ship exhaust gas may be introduced into the sulfur dioxide removal apparatus 110. In another embodiment, an amount of ammonia (NH₃) that is 1-2 times larger than the molar equivalent of sulfur dioxide (SO₂) may be introduced into the sulfur dioxide removal apparatus 110, and an amount of ammonia (NH₃) that is 0.7-1.5 times larger than the molar equivalent of nitrogen oxide (NOₓ) included in the ship exhaust gas may be introduced into the SCR apparatus 130.

For the SCR reaction in the SCR apparatus 130, it is necessary to adjust the temperature of the ship exhaust gas to 200-450°C. More preferably, it is necessary to adjust the temperature of the ship exhaust gas fed into the SCR apparatus 130 to 300-400°C. At the temperature of less than 300°C, there is a likelihood that the SCR reaction efficiency will decrease, and at the temperature above 400°C, the energy cost rises.

Meanwhile, as mentioned above in the 'background art', when ship exhaust gas including sulfur dioxide (SO₂) and nitrogen oxide (NOₓ) is supplied to the SCR apparatus 130, ammonium bisulfate (NH₄HSO₄) is generated, and the generated ammonium bisulfate (NH₄HSO₄) is adsorbed onto the pores of the SCR catalyst. The blocking of the SCR catalyst pores by adsorption of ammonium bisulfate (NH₄HSO₄) is due to the formation of ammonium bisulfate (NH₄HSO₄) in the SCR apparatus 130.

When sulfur dioxide (SO₂) is converted to ammonium bisulfate (NH₄HSO₄) gas by the sulfur dioxide removal apparatus 110 as in an embodiment of the present disclosure, ammonium bisulfate (NH₄HSO₄) gas is larger than the pore size of the SCR catalyst, and thus ammonium bisulfate (NH₄HSO₄) gas passes through the SCR apparatus 130 without adsorption onto the pores of the SCR catalyst.

Accordingly, the ship exhaust gas emanating from the SCR apparatus 130 is free of nitrogen oxide (NOₓ) and includes ammonium bisulfate (NH₄HSO₄) gas, and the ship exhaust gas emanating from the SCR apparatus 130, i.e., the ship exhaust gas including ammonium bisulfate (NH₄HSO₄) gas is supplied to the wet scrubber 120.

The wet scrubber 120 plays a role in dissolving ammonium bisulfate (NH₄HSO₄) included in the ship exhaust gas in raw water and discharging to remove it, in the same way as the above-described first embodiment. Additionally, in the same way as the first embodiment, in removing ammonium bisulfate (NH₄HSO₄), it is possible to reduce the amount of raw water used to below 1/10 of the wet scrubber 120 for sulfur dioxide, and the amount of raw water introduced into the wet scrubber 120 is 100-2000 times larger than the mass of ammonium bisulfate (NH₄HSO₄).

Meanwhile, in reducing nitrogen oxide (NOₓ) to nitrogen (N₂) through the SCR apparatus 130, the nitrogen oxide (NOₓ) reduction reaction may be promoted by introducing an oxidizer, thereby reducing the amount of ammonia (NH₃) introduced.

The nitrogen oxide (NOₓ) reduction reaction is described by the reaction equation of Equations 3 and 4 mentioned above. Nitric oxide (NO) included in the ship exhaust gas is converted to nitrogen dioxide (NO₂) by the reaction with oxygen (O₂) (see Equation 3), and the nitrogen dioxide (NO₂) is reduced to nitrogen (N₂) by the reaction with ammonia (NH₃) and nitric oxide (NO) (see Equation 4). As described above, oxygen (O₂) is involved in the nitrogen oxide reduction reaction, and when the oxidizer, i.e., the oxidizer comprising oxygen is additionally introduced, the concentration of nitrogen dioxide (NO₂) increases, thereby promoting the nitrogen oxide reduction reaction. In the same way as the ammonium bisulfate (NH₄HSO₄) generation reaction of Equations 1 and 2, this is based on the chemical reaction principle that the generation rate of a reactant is proportional to the concentration of the reactant. As the nitrogen oxide reduction reaction is promoted by the introduction of the oxidizer, when the oxidizer is introduced, even if the amount of ammonia (NH₃) introduced is reduced by a predetermined amount, it is possible to reduce the same amount of nitrogen oxide to nitrogen (N₂), compared to when the oxidizer is not introduced and only ammonia (NH₃) is introduced. That is, in reducing a specific amount of nitrogen oxide to nitrogen (N₂), when the oxidizer is introduced, it is possible to reduce the amount of ammonia (NH₃) introduced, compared to when the oxidizer is not introduced.

(Equation 3) 2NO + O₂ → 2NO₂

(Equation 4) NO + NO₂ + NH₃ → 2N₂ + 3H₂O

The oxidizer introduced to promote the nitrogen oxide reduction reaction is introduced under the following standards. The oxidizer is any one of oxygen (O₂), hydrogen peroxide (H₂O₂) and ozone (O₃) or a mixture thereof, and the introduction of the oxidizer may be classified into the introduction of air, oxygen (O₂) or an oxygen mixture, the introduction of a hyperoxygen compound such as hydrogen peroxide (H₂O₂) and ozone (O₃), and the introduction of oxygen (or the oxygen mixture) and the hyperoxygen compound together. Here, the oxidizer may be supplied through the oxidizer supply apparatus 150, and the oxidizer supply apparatus 150 may supply the oxidizer to the exhaust pipe between the sulfur dioxide removal apparatus 110 and the SCR apparatus 130, or may supply the oxidizer directly to the SCR apparatus 130.

When any one of air and oxygen (O₂) or a mixture thereof is introduced as the oxidizer, the amount of the oxidizer introduced is 20% or more and 250% or less of the total oxygen content included in the exhaust gas, and preferably it is necessary to adjust the amount of the oxidizer introduced to 30% or more and 200% or less of the total oxygen content. When the amount of the oxidizer introduced is smaller than 30% of the total oxygen content included in the exhaust gas, the nitrogen oxide (NOₓ) decomposition effect is insufficient, which makes it difficult to reduce the amount of ammonia (NH3) introduced, and when the amount of the oxidizer introduced is more than 200%, the nitrogen oxide (NOₓ) decomposition efficiency does not additionally increase, and rather, the cost of introducing the oxidizer may be higher than the reducible cost of introducing ammonia.

When any one of hydrogen peroxide (H₂O₂) and ozone (O₃) or a mixture thereof is introduced as the oxidizer, the amount of the oxidizer introduced is 2% or more and 25% or less of the total oxygen content included in the exhaust gas, and preferably it is necessary to adjust the amount of the oxidizer introduced to 4% or more and 20% or less of the total oxygen content. When the amount of the hyperoxygen compound introduced is smaller than 4% of the total oxygen content included in the exhaust gas, the nitrogen oxide (NOₓ) decomposition effect is insufficient, which makes it difficult to reduce the amount of ammonia (NH3) introduced, and when the amount of the hyperoxygen compound introduced is more than 20%, the nitrogen oxide (NOₓ) decomposition efficiency does not additionally increase, and rather, the cost of introducing the oxidizer may be higher than the saveable cost of introducing ammonia.

When a mixture of oxygen (any one of air and oxygen (O₂) or a mixture thereof) and the hyperoxygen compound (any one of hydrogen peroxide (H₂O₂) and ozone (O₃) or a mixture thereof) is introduced as the oxidizer, oxygen is introduced in the adjusted amount to 10% or more and 200% or less of the total oxygen content included in the exhaust gas and the hyperoxygen compound is introduced in the adjusted amount to 1% or more and 20% or less of the total oxygen content included in the exhaust gas.

The ship exhaust gas purification apparatus according to the first and second embodiments of the present disclosure and its operation have been hereinabove described. In the foregoing description, the operation of the ship exhaust gas purification apparatus according to the first and second embodiments of the present disclosure corresponds to a ship exhaust gas purification method according to the first and second embodiments of the present disclosure, respectively.

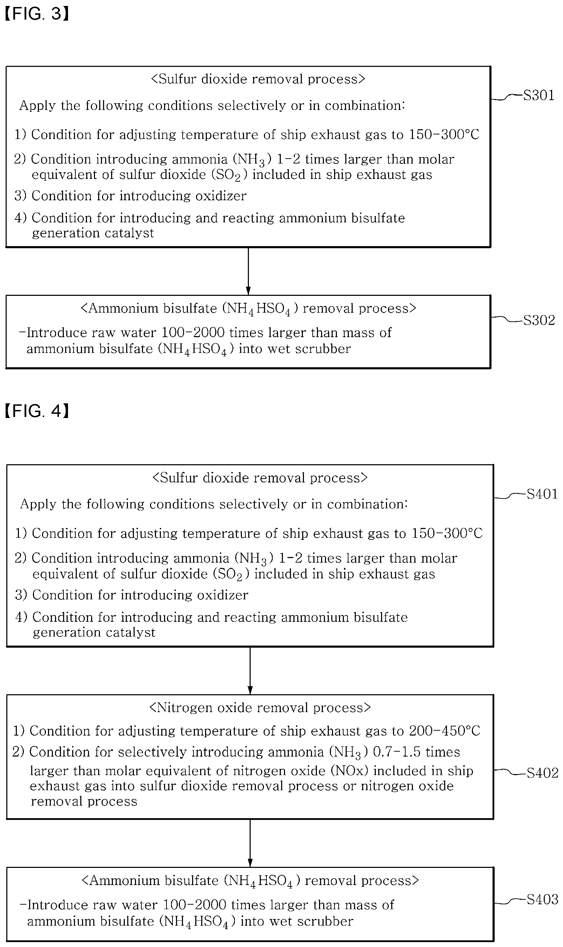

The ship exhaust gas purification method according to the first embodiment of the present disclosure includes the sulfur dioxide removal process (S301) and the ammonium bisulfate removal process (S302) in a sequential order as shown in FIG. 3. The sulfur dioxide removal process is performed by the sulfur dioxide removal apparatus 110, and the ammonium bisulfate removal process is performed by the wet scrubber 120.

When performing the sulfur dioxide removal process, it is necessary to maximize the ammonium bisulfate (NH₄HSO₄) synthesis efficiency, and to this end, any one selected from the following conditions or a combination thereof may be applied: condition for adjusting the temperature of the ship exhaust gas to 150-300°C, condition for introducing the oxidizer, condition for introducing ammonia (NH₃) 1-2 times larger than the molar equivalent of sulfur dioxide (SO₂) included in the ship exhaust gas, and condition for loading the ammonium bisulfate synthetic catalyst into the sulfur dioxide removal apparatus 110. Here, the condition for introducing the oxidizer is that when any one of air and oxygen (O₂) or a mixture thereof is introduced as the oxidizer, the amount of the oxidizer introduced is 20% or more and 250% or less of the total oxygen content included in the exhaust gas, when any one of hydrogen peroxide (H₂O₂) and ozone (O₃) or a mixture thereof is introduced as the oxidizer, the amount of the oxidizer introduced is 2% or more and 25% or less of the total oxygen content included in the exhaust gas, and along with this, when a mixture of at least one of air or oxygen (O₂) and at least one of hydrogen peroxide (H₂O₂) or ozone (O₃) is introduced as the oxidizer, at least one of air or oxygen (O₂) is introduced in the adjusted amount to 10% or more and 200% or less of the total oxygen content included in the exhaust gas and at least one of hydrogen peroxide (H₂O₂) or ozone (O₃) is introduced in the adjusted amount to 1% or more and 20% or less of the total oxygen content included in the exhaust gas.

Additionally, in removing ammonium bisulfate (NH₄HSO₄) through the wet scrubber 120, it is possible to reduce the amount of raw water used to below 1/10 of the wet scrubber 120 for sulfur dioxide, and the amount of raw water introduced into the wet scrubber 120 is 100-2000 times larger than the mass of ammonium bisulfate (NH₄HSO₄).

The ship exhaust gas purification method according to the second embodiment of the present disclosure includes the sulfur dioxide removal process (S401), the nitrogen oxide removal process (S402) and the ammonium bisulfate removal process (S403) in a sequential order as shown in FIG. 4. The sulfur dioxide removal process is performed by the sulfur dioxide removal apparatus 110, the nitrogen oxide removal process is performed by the SCR apparatus 130, and the ammonium bisulfate removal process is performed by the wet scrubber 120.

When performing the sulfur dioxide removal process, it is necessary to maximize the ammonium bisulfate (NH₄HSO₄) synthesis efficiency, and to this end, any one selected from the following conditions or a combination thereof may be applied: condition for adjusting the temperature of the ship exhaust gas to 150-300°C, condition for introducing the oxidizer, condition for introducing ammonia (NH₃) 1-2 times larger than the molar equivalent of sulfur dioxide (SO₂) included in the ship exhaust gas, and condition for introducing the ammonium bisulfate synthetic catalyst. Here, the condition for introducing the oxidizer is that when any one of air and oxygen (O₂) or a mixture thereof is introduced as the oxidizer, the amount of the oxidizer introduced is 20% or more and 250% or less of the total oxygen content included in the exhaust gas, and when any one of hydrogen peroxide (H₂O₂) and ozone (O₃) or a mixture thereof is introduced as the oxidizer, the amount of the oxidizer introduced is 2% or more and 25% or less of the total oxygen content included in the exhaust gas, and along with this, when a mixture of at least one of air or oxygen (O₂) and at least one of hydrogen peroxide (H₂O₂) or ozone (O₃) is introduced as the oxidizer, at least one of air or oxygen (O₂) is introduced in the adjusted amount to 10% or more and 200% or less of the total oxygen content included in the exhaust gas, and at least one of hydrogen peroxide (H₂O₂) or ozone (O₃) is introduced in the adjusted amount to 1% or more and 20% or less of the total oxygen content included in the exhaust gas.

When performing the nitrogen oxide removal process using the SCR apparatus 130, nitrogen oxide (NOₓ) included in the ship exhaust gas may be effectively removed by applying any one selected from the following conditions or a combination thereof: condition for adjusting the temperature of the ship exhaust gas to 200-450°C, condition for introducing 20-250% oxygen (or an oxygen mixture) or 2-25% hyperoxygen compound of the total oxygen content included in the ship exhaust gas, and condition for introducing ammonia (NH₃) 0.7-1.5 times larger than the molar equivalent of nitrogen oxide (NOₓ) included in the ship exhaust gas. Here, the condition for introducing ammonia (NH₃) 0.7-1.5 times larger than the molar equivalent of nitrogen oxide (NOₓ) included in the ship exhaust gas may be applied to the sulfur dioxide removal process. That is, when performing the sulfur dioxide removal process, an amount of ammonia (NH₃) that is 1-2 times larger than the molar equivalent of sulfur dioxide (SO₂) and an amount of ammonia (NH₃) that is 0.7-1.5 times larger than the molar equivalent of nitrogen oxide (NOₓ) included in the ship exhaust gas may be introduced into the sulfur dioxide removal apparatus 110.

Additionally, in removing ammonium bisulfate (NH₄HSO₄) through the wet scrubber 120, it is possible to reduce the amount of raw water used to below 1/10 of the wet scrubber 120 for sulfur dioxide, and the amount of raw water introduced into the wet scrubber 120 is 100-2000 times larger than the mass of ammonium bisulfate (NH₄HSO₄).

The exhaust gas purification apparatus and method according to the first and second embodiments of the present disclosure has been hereinabove described. Hereinafter, the embodiments of the present disclosure will be described in more detail with reference to experimental examples.

### [Mode for Invention]

### <Experimental example 1: SO₂ removal efficiency with change in amount of oxidizer introduced>

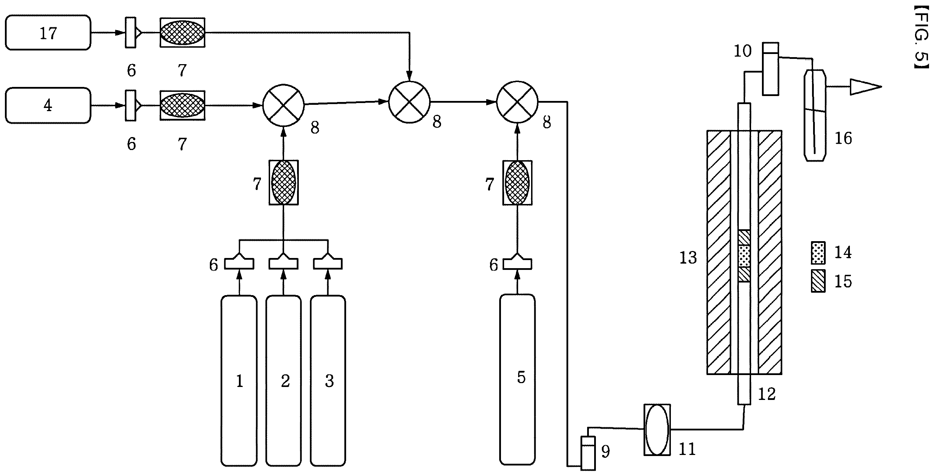

Air is introduced as an oxidizer, and the SO₂ removal efficiency with change in the amount of air introduced is measured. To this end, an experimental apparatus of FIG. 5 is prepared. In the experimental apparatus of FIG. 5, N₂ from an N₂ (100%) cylinder 1, NO/SO₂/N₂ mixed gas from an NO(8%)/SO₂(5%)/N₂(87%) mixed gas cylinder 2 and O₂/N₂ mixed gas from an O₂(3%)/N₂(97%) mixed gas cylinder 3 are heated to 230°C while passing through each preheater 7 at the rate of 970 mL/min, 10 mL/min and 10 mL/min, respectively, adjusted by a flow rate adjuster 6, and then transferred to a first gas mixer 8. Along with this, distilled water is supplied from a distilled water storage tank 4 at the rate of 3g/h by the flow rate adjuster, heated to 230°C by the preheater 7 and introduced into the first gas mixer 8. The mixed gas of SO₂, NO, O₂ and water vapor is transferred to a second gas mixer, and then mixed with preheated air of 230°C supplied from the oxidizer supply apparatus 17 through the flow rate adjuster 6, and mixed again in a third gas mixer with preheated NH₃ of 230°C supplied from an NH₃(NH₃-8%, N₂-92%) cylinder 5 through the flow rate adjuster 6 at the rate of 10 mL/min, and the final mixed gas is adjusted to the final reaction temperature in a cooler 11 and a reactor furnace 13 (inner diameter 5 cm, outer diameter 13 cm, length 42 cm) through a reactor entrance sample port 9 and is discharged through a reactor 12 (inner diameter 8 mm, outer diameter 10 mm, length 48 cm), a reactor exit sample port 10 and a gas bubbler 16. In FIG. 5, the reference numeral 14 is 3.5g of alumina-supported 0.5 wt% platinum as an ammonium bisulfate synthetic catalyst, and the reference numeral 15 is a catalyst supporting asbestos.

The concentration of SO₂ and NOₓ in the mixed and reactant gas is measured after collecting at the sample ports installed at the entrance and exit of the reactor, and the results are summarized in the following Table 1. In the following Table 1, the concentration of each gas in the mixed gas except water vapor and air supplied from the oxidizer supply apparatus is as follows: SO₂ 500 ppm, NO 800 ppm, NH₃ 800 ppm and O₂ 3%, and the amount of water vapor is 6% of the total amount of the mixed gas except air. Additionally, the composition of the mixed gas except external air is similar to the composition of engine exhaust gas using fuel oils containing 3.5% sulfur.

**[Table 1]**

| <Change in SO₂ and NOₓ concentration with change in amount of air introduced as oxidizer (reaction temperature is 230°C)> | | | | | | |
|---|---|---|---|---|---|---|
| Amount of air introduced (mL) | | 0.0 | 0.5 | 1.5 | 2.5 | 3.0 |
| Mixed gas (ppm) | SO₂ | 500 | 500 | 500 | 500 | 500 |
| | NOₓ | 800 | 800 | 800 | 800 | 800 |
| Reactor exit (ppm) | SO₂ | 126 | 118 | 95 | 68 | 55 |
| | NOₓ | 615 | 612 | 602 | 596 | 580 |

Referring to Table 1, it can be seen that when the amount of air introduced increases, the SO₂ removal rate increases. However, when the amount of air introduced is 0.5-2.5 mL, the SO₂ removal rate is fast, while when the amount of air introduced is less than 0.5 mL and when the amount of air introduced is more than 2.5 mL, the SO₂ removal rate is slower than when the amount of air introduced is 0.5-2.5 mL. Presumably, when the amount of air introduced is less than 0.5 mL, the ammonium bisulfate (NH₄HSO₄) generation promotion effect is very small, and when the amount of air introduced is more than 2.5 mL, the ammonium bisulfate (NH₄HSO₄) generation efficiency does not additionally increase. 0.5 mL of air signifies 35% of the total oxygen content of the mixed gas, 2.5 mL of air signifies 175% of the total oxygen content of the mixed gas, and 3.0 mL of air signifies 215% of the total oxygen content of the mixed gas. Accordingly, it can be seen based on the experimental results that when air is used as the oxidizer, it is necessary to introduce 20-250% air, and more preferably 30-200% air, based on the total oxygen content of the mixed gas.

Meanwhile, as shown in Table 1, it can be seen that as the amount of air introduced increases, the SO₂ concentration decreases and the NOₓ concentration also decreases, and the rate of decrease of the NOₓ concentration is much smaller than the rate of decrease of the SO₂ concentration. This result reveals that the ammonium bisulfate (NH₄HSO₄) generation is maximized and the nitrogen oxide (NOₓ) reduction reaction is minimized. That is, it can be seen that the ammonium bisulfate (NH₄HSO₄) generation reaction of Equations 1 and 2 is promoted, and the nitrogen oxide (NOₓ) reduction reaction of Equations 3 and 4 is suppressed.

### <Experimental example 2: SO₂ removal efficiency as a function of the type of oxidizer>

The SO₂ removal efficiency as a function of the type of oxidizer is investigated. The experimental method is the same as experimental example 1, but the experiment is performed by applying oxygen (O₂), air, hydrogen peroxide (H₂O₂) and ozone (O₃) as the oxidizer respectively. The temperature inside the reactor is set to 250°C, the SO₂ and NOₓ concentration in the gas discharged through the reactor exit is measured, and the results are shown in the following Table 2.

**[Table 2] <SO₂ and NOₓ removal efficiency as a function of the type of oxidizer>**

| Oxidizer (amount mL) | | Oxidizer (0) | Oxygen (0.3) | Air (1.5) | Hydrogen peroxide (0.03) | Ozone (0.03) |
|---|---|---|---|---|---|---|
| Reactor exit (ppm) | SO₂ | 209 | 83 | 81 | 68 | 63 |
| | NOₓ | 536 | 522 | 517 | 506 | 501 |

Referring to Table 2, compared to the absence of the oxidizer (SO₂-209, NOₓ-536), when the oxidizer is introduced, it can be seen that the SO₂ concentration is significantly reduced irrespective of the type of oxidizer. In particular, it can be seen that when hydrogen peroxide and ozone are introduced as the oxidizer, the SO₂ removal efficiency is higher than when oxygen and air are introduced. In contrast, it can be seen that in the case of the NOₓ concentration, its rate of decrease is smaller than that of the SO₂ concentration irrespective of whether the oxidizer is introduced or not. This result reveals that the ammonium bisulfate (NH₄HSO₄) generation is maximized and the nitrogen oxide (NOₓ) reduction reaction is minimized in the same way as experimental example 1.

### <Experimental example 3: NOₓ removal efficiency of SCR apparatus with change in amount of oxidizer introduced>

After 3g of NOₓ SCR commercial catalyst (V₂O₅/TiO₂/WO₃) is loaded in the reactor, the NOₓ removal efficiency with change in the amount of oxidizer (oxygen) introduced is measured. The introduction of SO₂ is stopped, and the oxidizer is introduced in varying amounts of oxygen from the oxidizer supply apparatus filled with oxygen (O₂). The experiment is performed by fixing the temperature of all the preheaters to 250°C and increasing the temperature of the reactor loaded with the catalyst to 320°C. The NOₓ concentration is measured at the reactor exit and the results are summarized in Table 3. The other experimental method is applied equally to experimental example 1.

**[Table 3]**

| <NOₓ removal efficiency of SCR apparatus with change in amount of oxidizer introduced> | | | | | | |
|---|---|---|---|---|---|---|
| Amount of oxygen introduced (mL) | | 0.0 | 0.1 | 0.3 | 0.5 | 0.7 |
| Mixed gas (ppm) | NOₓ | 800 | 800 | 800 | 800 | 800 |
| Reactor exit (ppm) | NOₓ | 215 | 192 | 102 | 56 | 42 |

Referring to Table 3, it can be seen that when the amount of oxygen introduced increases, the NOₓ removal rate increases. However, when the amount of oxygen introduced is 0.1-0.5 mL, the NOₓ removal rate is fast, while when the amount of oxygen introduced is less than 0.1 mL and when the amount of oxygen introduced is more than 0.5 mL, the NOₓ removal rate is slower than when the amount of oxygen introduced is 0.1-0.5 mL. Presumably, when the amount of oxygen introduced is less than 0.1 mL, the ammonium bisulfate (NH₄HSO₄) generation promotion effect is very small, and when the amount of oxygen introduced is more than 0.5 mL, the ammonium bisulfate (NH₄HSO₄) generation efficiency does not additionally increase. 0.1 mL of oxygen signifies 35% of the total oxygen content of the mixed gas, 0.5 mL of oxygen signifies 175% of the total oxygen content of the mixed gas, and 0.7 mL of oxygen signifies 245% of the total oxygen content of the mixed gas. Accordingly, it can be seen based on the experimental results that when using oxygen as the oxidizer, it is necessary to introduce 20-250% oxygen, and more preferably 30-200% air, based on the total oxygen content of the mixed gas.

### [Detailed Description of Main Elements]

110: Sulfur dioxide removal apparatus
120: Wet scrubber
130: SCR apparatus
140: Ammonia supply apparatus
150: Oxidizer supply apparatus

## Claims

1. A ship exhaust gas purification apparatus, comprising:
a sulfur dioxide removal apparatus (110) configured to provide a space for inducing reaction of ammonia (NH₃) and sulfur dioxide (SO₂), and convert sulfur dioxide (SO₂) included in ship exhaust gas through the reaction of sulfur dioxide (SO₂) and ammonia (NH₃) to ammonium bisulfate (NH₄HSO₄); and
a wet scrubber (120) configured to dissolve the ammonium bisulfate (NH₄HSO₄) generated by the sulfur dioxide removal apparatus (110) in raw water to remove it,
an oxidizer supply apparatus (150) configured to introduce an oxidizer into the sulfur dioxide removal apparatus (110) or the ship exhaust gas supplied to the sulfur dioxide removal apparatus (110), and the oxidizer promotes the ammonium bisulfate (NH₄HSO₄) generation reaction by increasing a concentration of sulfur trioxide (SO₃),
an ammonia supply apparatus (140) configured to supply ammonia to the sulfur dioxide removal apparatus, wherein to promote the ammonium bisulfate (NH₄HSO₄) generation reaction and suppress nitrogen reduction reaction by reaction of nitrogen oxide (NOₓ) and ammonia (NH₃) in the sulfur dioxide removal apparatus (110), a temperature inside the sulfur dioxide removal apparatus (110) or a temperature of the ship exhaust gas fed into the sulfur dioxide removal apparatus (110) is 150-300°C,
**characterized in that**
the oxidizer is any one of air, oxygen (O₂), hydrogen peroxide (H₂O₂) and ozone (O₃) or a mixture thereof, and
when any one of air and oxygen (O₂) or a mixture thereof is introduced as the oxidizer, an amount of the oxidizer introduced is 20% or more and 250% or less of total oxygen content included in the exhaust gas,
wherein an ammonium bisulfate synthetic catalyst is loaded into the sulfur dioxide removal apparatus, wherein the ammonium bisulfate synthetic catalyst is any one of an oxidation catalyst, a mixture of the oxidation catalyst and a solid acid and a solid acid embedded with the oxidation catalyst or a mixture thereof wherein a oxidation catalyst is any one of MnO₂, V₂O₅, Ni, Pd and Pt or a mixture thereof, and
a solid acid is one selected from the group consisting of basalt, granite, limestone, sandstone, shale, metamorphic rock, kaolinite, attapulgite, bentonite, montmorillonite, zeolite, zinc oxide (ZnO), aluminum oxide (Al₂O₃), titanium oxide (TiO₂), cesium oxide (CeO₂), vanadium oxide (V₂O₅), silicon oxide (SiO₂), chromium oxide (Cr₂O₃), calcium sulfate (CaSO₄), manganese sulfate (MnSO₄), nickel sulfate (NiSO₄), copper sulfate (CuSO₄), cobalt sulfate (CoSO₄), cadmium sulfate (CdSO₄), magnesium sulfate (MgSO₄), iron II sulfate (FeSO₄), aluminum sulfate (Al₂(SO₄)₃), calcium nitrate (Ca(NO₃)₂), zinc nitrate (Zn(NO₃)₂), iron III nitrate (Fe(NO₃)₃), aluminum phosphate (AlPO₄), iron III phosphate (FePO₄), chromium phosphate (CrPO₄), copper phosphate (Cu₃(PO₄)₂), zinc phosphate (Zn₃(PO₄)₄), magnesium phosphate (Mg₃(PO₄)₂), aluminum chloride (AlCl₃), titanium chloride (TiCl₄), calcium chloride (CaCl₂), calcium fluoride (CaF₂), barium fluoride (BaF₂) and calcium carbonate (CaCOs) or a mixture thereof.

2. The ship exhaust gas purification apparatus according to claim 1, further comprising:
a selective catalytic reduction (SCR) apparatus (130) configured to reduce nitrogen oxide (NOₓ) included in the ship exhaust gas from the ship exhaust gas discharged from the sulfur dioxide removal apparatus to (110) nitrogen (N₂),
wherein the oxidizer is introduced into the SCR apparatus (130) or the ship exhaust gas supplied to the SCR apparatus (130), and the oxidizer promotes the nitrogen oxide (NOₓ) reduction reaction by increasing a concentration of nitrogen dioxide (NO₂).

3. The ship exhaust gas purification apparatus according to claim 1, wherein in the sulfur dioxide removal apparatus (110), the ammonium bisulfate (NH₄HSO₄) generation reaction is promoted, and nitrogen reduction reaction by reaction of nitrogen oxide (NOₓ) and ammonia (NH₃) is suppressed.

4. The ship exhaust gas purification apparatus according to claim 1, further comprising:
an oxidizer supply apparatus (150),
wherein the oxidizer supply apparatus (150) supplies the oxidizer to an exhaust pipe between an engine and the sulfur dioxide removal apparatus (110) or the sulfur dioxide removal apparatus (110).

5. The ship exhaust gas purification apparatus according to claim 2, further comprising:
an oxidizer supply apparatus (150),
wherein the oxidizer supply apparatus (150) supplies the oxidizer to an exhaust pipe between the sulfur dioxide removal apparatus (110) and the SCR apparatus (130) or the SCR apparatus (130).

6. The ship exhaust gas purification apparatus according to claim 1 or 2, wherein the oxidizer is any one of air, oxygen (O₂), hydrogen peroxide (H₂O₂), and ozone (O₃) or a mixture thereof, and
when a mixture of at least one of air or oxygen (O₂) and at least one of hydrogen peroxide (H₂O₂) or ozone (O₃) is introduced as the oxidizer, the at least one of air or oxygen (O₂) is introduced in an adjusted amount to 10% or more and 200% or less of total oxygen content included in the exhaust gas, and the at least one of hydrogen peroxide (H₂O₂) or ozone (O₃) is introduced in an adjusted amount to 1% or more and 20% or less of the total oxygen content included in the exhaust gas.

7. The ship exhaust gas purification apparatus according to claim 1, wherein an amount of ammonia (NH₃) that is 1-2 times larger than a molar equivalent of the sulfur dioxide (SO₂) included in the ship exhaust gas is introduced into the sulfur dioxide removal apparatus (110).

8. The ship exhaust gas purification apparatus according to claim 1, wherein an ammonium bisulfate synthetic catalyst is loaded into the sulfur dioxide removal apparatus (110), and the ammonium bisulfate synthetic catalyst plays a role in promoting the generation of the ammonium bisulfate (NH₄HSO₄), and
wherein the ammonium bisulfate synthetic catalyst is any one of an oxidation catalyst, a mixture of the oxidation catalyst and a solid acid and a solid acid embedded with the oxidation catalyst or a mixture thereof.

9. The ship exhaust gas purification apparatus according to claim 1, wherein a material to be dissolved by the wet scrubber (120) is the ammonium bisulfate (NH₄HSO₄), and an amount of raw water introduced into the wet scrubber (120) is 100-2000 times larger than a mass of the ammonium bisulfate (NH₄HSO₄).

10. The ship exhaust gas purification apparatus according to claim 2, wherein ammonia (NH₃) is introduced into the SCR apparatus (130) as a reducing agent, and the ammonia (NH₃) is introduced 0.7-1.5 times larger than a molar equivalent of the nitrogen oxide (NOₓ) included in the ship exhaust gas.

11. The ship exhaust gas purification apparatus according to claim 2, wherein an amount of ammonia (NH₃) that is 1-2 times larger than a molar equivalent of the sulfur dioxide (SO₂) included in the ship exhaust gas and an amount of ammonia (NH₃) that is 0.7-1.5 times larger than a molar equivalent of the nitrogen oxide (NOₓ) included in the ship exhaust gas are introduced into the sulfur dioxide removal apparatus (110).

## Patentansprüche

1. Schiffsabgasreinigungsvorrichtung, umfassend:
eine Schwefeldioxidentfernungsvorrichtung (110), die dazu konfiguriert ist, einen Raum zum Auslösen einer Reaktion von Ammoniak (NH₃) und Schwefeldioxid (SO₂) bereitzustellen und im Schiffsabgas enthaltenes Schwefeldioxid (SO₂) durch die Reaktion von Schwefeldioxid (SO₂) und Ammoniak (NH₃) in Ammoniumbisulfat (NH₄HSO₄) umzuwandeln; und
einen Nasswäscher (120), der dazu konfiguriert ist, das durch die Schwefeldioxidentfernungsvorrichtung (110) erzeugte Ammoniumbisulfat (NH₄HSO₄) in Rohwasser aufzulösen, um es zu entfernen,
eine Oxidationsmittelzuführvorrichtung (150), die dazu konfiguriert ist, ein Oxidationsmittel in die Schwefeldioxidentfernungsvorrichtung (110) oder das der Schwefeldioxidentfernungsvorrichtung (110) zugeführte Schiffsabgas einzuführen, und das Oxidationsmittel die Ammoniumbisulfat (NH₄HSO₄)-Erzeugungsreaktion durch Erhöhen einer Konzentration von Schwefeltrioxid (SO₃) fördert,
eine Ammoniakzuführvorrichtung (140), die dazu konfiguriert ist, der Schwefeldioxidentfernungsvorrichtung Ammoniak zuzuführen,
wobei, um die Ammoniumbisulfat (NH₄HSO₄)-Erzeugungsreaktion zu fördern und eine Stickstoff-Reduktionsreaktion durch Reaktion von Stickstoffoxid (NOₓ) und Ammoniak (NH₃) in der Schwefeldioxidentfernungsvorrichtung (110) zu unterdrücken, eine Temperatur innerhalb der Schwefeldioxidentfernungsvorrichtung (110) oder eine Temperatur des in die Schwefeldioxidentfernungsvorrichtung (110) zugeführten Schiffsabgases 150-300 °C ist,
**dadurch gekennzeichnet, dass** das Oxidationsmittel irgendeines aus Luft, Sauerstoff (O₂), Wasserstoffperoxid (H₂O₂) und Ozon (O₃) oder eine Mischung daraus ist, und
wenn irgendeines von Luft und Sauerstoff(O₂) oder eine Mischung daraus als das Oxidationsmittel eingeführt wird, eine Menge des eingeführten Oxidationsmittels 20% oder mehr und 250% oder weniger eines im Abgas enthaltenen Gesamtsauerstoffgehalts ist,
wobei ein synthetischer Ammoniumbisulfat-Katalysator in die Schwefeldioxidentfernungsvorrichtung geladen wird, wobei der synthetische Ammoniumbisulfat-Katalysator irgendeiner von einem Oxidationskatalysator, einem Gemisch des Oxidationskatalysators und einer feste Säure und einer in dem Oxidationskatalysator eingebetteten festen Säure oder eine Mischung daraus ist,
wobei der Oxidationskatalysator irgendeines von MnOz, V₂O₅, Ni, Pd und Pt oder eine Mischung daraus ist, und
eine feste Säure eine ist, die aus der Gruppe ausgewählt ist, die aus Basalt, Granit, Kalkstein, Sandstein, Schiefer, metamorphem Gestein, Kaolinit, Attapulgit, Bentonit, Montmorillonit, Zeolith, Zinkoxid (ZnO), Aluminiumoxid (Al₂O₃), Titanoxid (TiOz), Cäsiumoxid (CeO₂), Vanadiumoxid (V₂O₅), Siliziumoxid (SiO₂), Chromoxid (Cr₂O₃), Kalziumsulfat (CaSO₄), Mangansulfat (MnSO₄), Nickelsulfat (NiSO₄), Kupfersulfat (CuSO₄), Kobaltsulfat (CoSO₄), Kadmiumsulfat (CdSO₄), Magnesiumsulfat (MgSO₄), Eisen-II-Sulfat (FeSO₄), Aluminiumsulfat (Al₂(SO₄)₃), Kalziumnitrat (Ca(NO₃)₂), Zinknitrat (Zn(NO₃)₂), Eisen-III-Nitrat (Fe(NO₃)₃), Aluminiumphosphat (AlPO₄), Eisen-III-Phosphat (FePO₄), Chromphosphat (CrPO₄), Kupferphosphat (Cu₃(PO₄)₂), Zinkphosphat (Zn₃(PO₄)₄), Magnesiumphosphat (Mg₃(PO₄)₂), Aluminiumchlorid (AlCl₃), Titanchlorid (TiCl₄), Kalziumchlorid (CaCl₂), Kalziumfluorid (CaF₂), Bariumfluorid (BaF₂) und Kalziumkarbonat (CaCO₃) oder einer Mischung daraus besteht.

2. Schiffsabgasreinigungsvorrichtung nach Anspruch 1, ferner umfassend:
eine Vorrichtung (130) zur selektiven katalytischen Reaktion (SCR), die dazu konfiguriert ist, in dem Schiffsabgas enthaltenes Stickstoffoxid (NOₓ) aus dem aus der Schwefeldioxidentfernungsvorrichtung (110) abgeführten Schiffsabgas zu Stickstoff (N₂) zu reduzieren,
wobei das Oxidationsmittel in die SCR-Vorrichtung (130) oder das der SCR-Vorrichtung (130) zugeführte Schiffsabgas eingeführt wird, und das Oxidationsmittel die Stickstoffoxid (NOₓ)-Reduktionsreaktion durch Erhöhen einer Konzentration von Stickstoffdioxid (NO₂) fördert.

3. Schiffsabgasreinigungsvorrichtung nach Anspruch 1, wobei in der Schwefeldioxidentfernungsvorrichtung (110) die Ammoniumbisulfat (NH₄HSO₄)-Erzeugungsreaktion gefördert wird, und eine Stickstoff-Reduktionsreaktion durch eine Reaktion von Stickstoffoxid (NOₓ) und Ammoniak (NH₃) unterdrückt wird.

4. Schiffsabgasreinigungsvorrichtung nach Anspruch 1, ferner umfassend:
eine Oxidationsmittelzuführvorrichtung (150),
wobei die Oxidationsmittelzuführvorrichtung (150) das Oxidationsmittel einem Abgasrohr zwischen einem Motor und der Schwefeldioxidentfernungsvorrichtung (110) oder der Schwefeldioxidentfernungsvorrichtung (110) zuführt.

5. Schiffsabgasreinigungsvorrichtung nach Anspruch 2, ferner umfassend:
eine Oxidationsmittelzuführvorrichtung (150),
wobei die Oxidationsmittelzuführvorrichtung (150) das Oxidationsmittel einem Abgasrohr zwischen der Schwefeldioxidentfernungsvorrichtung (110) und der SCR-Vorrichtung (130) oder der SCR-Vorrichtung (130) zuführt.

6. Schiffsabgasreinigungsvorrichtung nach Anspruch 1 oder 2, wobei das Oxidationsmittel irgendeines von Luft, Sauerstoff (O₂), Wasserstoffperoxid (H₂O₂) und Ozon (O₃) oder eine Mischung daraus ist, und
wenn ein Gemisch von wenigstens einem von Luft oder Sauerstoff (O₂) und wenigstens einem von Wasserstoffperoxid (H₂O₂) oder Ozon (O₃) als das Oxidationsmittel eingeführt wird, das wenigstens eine von Luft oder Sauerstoff (O₂) in einer angepassten Menge von 10% oder mehr und 200% oder weniger eines im Abgas enthaltenen Gesamtsauerstoffgehalts eingeführt wird, und das wenigstens eine von Wasserstoffperoxid (H₂O₂) oder Ozon (O₃) in einer angepassten Menge von 1% oder mehr und 20% oder weniger des im Abgas enthaltenen Gesamtsauerstoffgehalts eingeführt wird.

7. Schiffsabgasreinigungsvorrichtung nach Anspruch 1, wobei eine Menge von Ammoniak (NH₃), die 1-2 mal größer als ein molares Äquivalent des im Schiffsabgas enthaltenen Schwefeldioxids (SOz) ist, in die Schwefeldioxidentfernungsvorrichtung (110) eingeführt wird.

8. Schiffsabgasreinigungsvorrichtung nach Anspruch 1, wobei ein synthetischer Ammoniumbisulfat-Katalysator in die Schwefeldioxidentfernungsvorrichtung geladen wird, und der synthetische Ammoniumbisulfat-Katalysator beim Fördern der Erzeugung des Ammoniumbisulfats (NH₄HSO₄) eine Rolle spielt, und
wobei der synthetische Ammoniumbisulfat-Katalysator irgendeiner von einem Oxidationskatalysator, einem Gemisch des Oxidationskatalysators und einer festen Säure und einer in dem Oxidationskatalysator eingebetteten festen Säure oder eine Mischung daraus ist.

9. Schiffsabgasreinigungsvorrichtung nach Anspruch 1, wobei ein durch den Nasswäscher (120) aufzulösendes Material das Ammoniumbisulfat (NH₄HSO₄) ist, und eine in den Nasswäscher (120) eingeführte Menge von Rohwasser 100-2000 mal größer als eine Masse des Ammoniumbisulfats (NH₄HSO₄) ist.

10. Schiffsabgasreinigungsvorrichtung nach Anspruch 2, wobei Ammoniak (NH₃) in die SCR-Vorrichtung (130) als ein Reduktionsmittel eingeführt wird, und das Ammoniak (NH₃) 0,7-1,5 mal größer als ein molares Äquivalent des im Schiffsabgas enthaltenen Stickstoffoxids (NOₓ) eingeführt wird.

11. Schiffsabgasreinigungsvorrichtung nach Anspruch 2, wobei eine Menge von Ammoniak (NH₃), die 1-2 mal größer als ein molares Äquivalent des im Schiffsabgas enthaltenen Schwefeldioxids (SO₂) ist, und eine Menge von Ammoniak (NH₃), die 0.7-1.5 mal größer als ein molares Äquivalent des im Schiffsabgas enthaltenen Stickstoffoxids (NOₓ) ist, in die Schwefeldioxidentfernungsvorrichtung (110) eingeführt werden.

## Revendications

1. Un appareil de purification de gaz d'échappement d'un navire, comprenant :
un appareil (110) d'élimination du dioxyde de soufre, configuré pour fournir un espace pour induire une réaction d'ammoniac (NH₃) et de dioxyde de soufre (SO₂), et pour convertir le dioxyde de soufre (SO₂) inclus dans les gaz d'échappement du navire par la réaction du dioxyde de soufre (SO₂) et de l'ammoniac (NH₃) en bisulfate d'ammonium (NH₄HSO₄) ; et
un épurateur humide (120) configuré pour dissoudre le bisulfate d'ammonium (NH₄HSO₄) généré par l'appareil (110) d'élimination du dioxyde de soufre dans de l'eau brute afin de l'éliminer,
un appareil (150) d'alimentation en oxydant, configuré pour introduire un oxydant dans l'appareil (110) d'élimination du dioxyde de soufre ou dans les gaz d'échappement du navire fournis à l'appareil (110) d'élimination du dioxyde de soufre, et l'oxydant favorise la réaction de génération de bisulfate d'ammonium (NH₄HSO₄) en augmentant une concentration de trioxyde de soufre (SO₃),
un appareil (140) d'alimentation en ammoniac, configuré pour fournir de l'ammoniac à l'appareil d'élimination du dioxyde de soufre,
dans lequel, pour favoriser la réaction de génération de bisulfate d'ammonium (NH₄HSO₄) et supprimer la réaction de réduction d'azote par réaction d'oxyde d'azote (NOₓ) et d'ammoniac (NH₃) dans l'appareil (110) d'élimination du dioxyde de soufre, une température à l'intérieur de l'appareil (110) d'élimination du dioxyde de soufre ou une température des gaz d'échappement du navire introduits dans l'appareil (110) d'élimination du dioxyde de soufre est de 150 à 300°C,
**caractérisé en ce que**
l'oxydant est l'un quelconque parmi l'air, l'oxygène (O₂), le peroxyde d'hydrogène (H₂O₂) et l'ozone (O₃), ou un mélange de ceux-ci, et
lorsque l'un quelconque parmi l'air et l'oxygène (O₂), ou un mélange de ceux-ci est introduit en tant qu'oxydant, une quantité de l'oxydant introduit est de 20 % ou plus et de 250 % ou moins de la teneur totale en oxygène incluse dans les gaz d'échappement,
dans lequel un catalyseur synthétique au bisulfate d'ammonium est chargé dans l'appareil d'élimination du dioxyde de soufre, le catalyseur synthétique au bisulfate d'ammonium étant l'un quelconque parmi un catalyseur d'oxydation, un mélange du catalyseur d'oxydation et un acide solide et un acide solide incorporé avec le catalyseur d'oxydation, ou un mélange de ceux-ci,
un catalyseur d'oxydation étant l'un quelconque parmi MnO₂, V₂O₅, Ni, Pd et Pt, ou un mélange de ceux-ci, et
un acide solide est un acide choisi dans le groupe constitué par le basalte, le granite, le calcaire, le grès, le schiste, la roche métamorphique, la kaolinite, l'attapulgite, la bentonite, la montmorillonite, la zéolite, l'oxyde de zinc (ZnO), l'oxyde d'aluminium (Al₂O₃), l'oxyde de titane (TiO₂), l'oxyde de césium (CeO₂), l'oxyde de vanadium (V₂O₅), l'oxyde de silicium (SiO₂), l'oxyde de chrome (Cr₂O₃), le sulfate de calcium (CaSO₄), le sulfate de manganèse (MnSO₄), le sulfate de nickel (NiSO₄), le sulfate de cuivre (CuSO₄), le sulfate de cobalt (CoSO₄), le sulfate de cadmium (CdSO₄), le sulfate de magnésium (MgSO₄), le sulfate de fer Il (FeSO₄), le sulfate d'aluminium (Al₂(SO₄)₃), le nitrate de calcium (Ca(NO₃)₂), le nitrate de zinc (Zn(NO₃)₂), le nitrate de fer III (Fe(NO₃)₃), le phosphate d'aluminium (AlPO₄), le phosphate de fer III (FePO₄), le phosphate de chrome (CrPO₄), le phosphate de cuivre (Cu₃(PO₄)₂), le phosphate de zinc (Zn₃(PO₄)₄), le phosphate de magnésium (Mg₃(PO₄)₂), le chlorure d'aluminium (AlCl₃), le chlorure de titane (TiCl₄), le chlorure de calcium (CaCl₂), le fluorure de calcium (CaF₂), le fluorure de baryum (BaF₂) et le carbonate de calcium (CaCO₃), ou un mélange de ceux-ci.

2. L'appareil de purification de gaz d'échappement de navire selon la revendication 1, comprenant en outre :
un appareil (130) de réduction catalytique sélective (SCR) configuré pour réduire en azote (N₂) l'oxyde d'azote (NOₓ) inclus dans les gaz d'échappement du navire provenant des gaz d'échappement du navire évacués de l'appareil (110) d'élimination du dioxyde de soufre,
l'oxydant étant introduit dans l'appareil SCR (130) ou les gaz d'échappement du navire fournis à l'appareil SCR (130), et l'oxydant favorise la réaction de réduction de l'oxyde d'azote (NOₓ) en augmentant une concentration de dioxyde d'azote (NO₂).

3. L'appareil de purification de gaz d'échappement de navire selon la revendication 1, dans lequel dans l'appareil (110) d'élimination du dioxyde de soufre, la réaction de génération de bisulfate d'ammonium (NH₄HSO₄) est favorisée, et la réaction de réduction de l'azote par réaction d'oxyde d'azote (NOₓ) et d'ammoniac (NH₃) est supprimée.

4. L'appareil de purification de gaz d'échappement de navire selon la revendication 1, comprenant en outre :
un appareil (150) d'alimentation en oxydant,
l'appareil (150) d'alimentation en oxydant alimentant l'oxydant dans un tuyau d'échappement situé entre un moteur et l'appareil (110) d'élimination du dioxyde de soufre ou dans l'appareil (110) d'élimination du dioxyde de soufre.

5. L'appareil de purification de gaz d'échappement d'un navire selon la revendication 2, comprenant en outre :
un appareil (150) d'alimentation en oxydant,
l'appareil (150) d'alimentation en oxydant alimentant l'oxydant dans un tuyau d'échappement situé entre l'appareil (110) d'élimination du dioxyde de soufre et l'appareil SCR (130) ou dans l'appareil SCR (130).

6. L'appareil de purification de gaz d'échappement d'un navire selon la revendication 1 ou la revendication 2, dans lequel l'oxydant est l'un quelconque parmi l'air, l'oxygène (O₂), le peroxyde d'hydrogène (H₂O₂) et l'ozone (O₃), ou un mélange de ceux-ci, et,
lorsqu'un mélange d'au moins un parmi l'air et l'oxygène (O₂) et d'au moins un parmi le peroxyde d'hydrogène (H₂O₂) et l'ozone (O₃) est introduit en tant qu'oxydant, ledit au moins l'un parmi l'air et l'oxygène (O₂) est introduit en une quantité ajustée à 10 % ou plus et 200 % ou moins de la teneur totale en oxygène incluse dans les gaz d'échappement, et ledit au moins un parmi le peroxyde d'hydrogène (H₂O₂) ou l'ozone (O₃) est introduit en une quantité ajustée à 1 % ou plus et 20 % ou moins de la teneur totale en oxygène incluse dans les gaz d'échappement.

7. L'appareil de purification de gaz d'échappement de navire selon la revendication 1,
dans lequel une quantité d'ammoniac (NH₃) qui est 1 à 2 fois supérieure à un équivalent molaire du dioxyde de soufre (SO₂) inclus dans les gaz d'échappement du navire est introduite dans l'appareil (110) d'élimination du dioxyde de soufre.

8. L'appareil de purification de gaz d'échappement de navire selon la revendication 1,
dans lequel un catalyseur synthétique au bisulfate d'ammonium est chargé dans l'appareil (110) d'élimination du dioxyde de soufre, et le catalyseur synthétique au bisulfate d'ammonium joue un rôle dans la promotion de la génération du bisulfate d'ammonium (NH₄HSO₄), et
dans lequel le catalyseur synthétique au bisulfate d'ammonium est l'un quelconque parmi un catalyseur d'oxydation, un mélange du catalyseur d'oxydation et d'un acide solide et un acide solide incorporé au catalyseur d'oxydation, ou un mélange de ceux-ci.

9. L'appareil de purification de gaz d'échappement de navire selon la revendication 1, dans lequel un matériau à dissoudre par l'épurateur humide (120) est le bisulfate d'ammonium (NH₄HSO₄), et une quantité d'eau brute introduite dans l'épurateur humide (120) est 100 à 2000 fois supérieure à la masse du bisulfate d'ammonium (NH₄HSO₄).

10. L'appareil de purification de gaz d'échappement de navire selon la revendication 2, dans lequel de l'ammoniac (NH₃) est introduit dans l'appareil SCR (130) en tant qu'agent réducteur, et l'ammoniac (NH₃) est introduit en une quantité 0,7 à 1,5 fois supérieure à un équivalent molaire de l'oxyde d'azote (NOₓ) contenu dans les gaz d'échappement du navire.

11. L'appareil de purification de gaz d'échappement de navire selon la revendication 2, dans lequel une quantité d'ammoniac (NH₃) qui est 1 à 2 fois supérieure à un équivalent molaire du dioxyde de soufre (SO₂) contenu dans les gaz d'échappement du navire et une quantité d'ammoniac (NH₃) qui est 0,7 à 1,5 fois supérieure à un équivalent molaire de l'oxyde d'azote (NOₓ) contenu dans les gaz d'échappement du navire sont introduites dans l'appareil (110) d'élimination du dioxyde de soufre.
